# EUROPEAN PATENT APPLICATION

(11) **EP 1 475 713 A1**
(43) Date of publication of application: **10.11.2004**
(21) Application number: 03010124.0
(22) Date of filing: 05.05.2003
(51) Int. Cl.: G06F 11/36

(54) **Program-controlled unit with a first CPU and a second CPU used as bypass hardware**

(71) Applicant: Infineon Technologies AG, 81669 München (DE)
(72) Inventor: Siebert, Harry, 82178 Puchheim (DE); Mayer, Albrecht, Dr., 82041 Deisenhofen (DE); Kolof, Andreas, 82194 Göbenzell (DE)
(74) Representative: Repkow, Ines, Dr. Dipl.-Ing.

(57) **Abstract**

A program-controlled unit with a CPU is described. The program-controlled unit described is distinguished by the fact that it contains a second CPU, which can be used as bypass hardware or as a constituent part of a bypass hardware.

## Description

The present invention relates to an apparatus in accordance with the preamble of patent claim 1, i.e. a program-controlled unit with a CPU.

Program-controlled units such as, for example microprocessors, microcontrollers, signal processors, etc. have been known for many years in innumerable embodiments and need no further explanation.

If a program-controlled unit has to fulfill a task which brings the program-controlled unit to the limits of its performance, the case may arise in which the program-controlled unit or the system containing the latter can be tested under real conditions only when the development of the program to be executed by the program-controlled unit has essentially been concluded.

This is the case for example with a program-controlled unit of a controller for controlling an internal combustion engine. Such a program-controlled unit has to carry out very complex and complicated calculations and control tasks in very short time intervals. These calculations and control tasks are so complex and complicated that they can be executed in the respectively available time only when the program has been written optimally. If this is not the case, it not infrequently happens that individual calculations and control tasks take so long to carry out that the internal combustion engine is not driven properly despite an optimal control algorithm.

This problem could be avoided by the program that is to be executed by the program-controlled unit being written, right from the start, in such a way that the calculations and control tasks to be carried out can be carried out in each case within the available time. However, such program optimization is very complicated and is generally carried out only right at the end of program development, more precisely only after the test of the proper functioning of the algorithm used.

Another possibility for solving the problem described above consists in using an external bypass hardware. Such a bypass hardware is a hardware which is able to undertake at least parts of the tasks that are to be performed by the program-controlled unit, and to carry out these tasks more rapidly than the program-controlled unit is able to do. The bypass hardware is connected to the program-controlled unit and the program-controlled unit causes it, as required, to undertake a specific task.

By way of example, when the program-controlled unit has to carry out a complicated filter operation in a short time, it can cause said filter operation to be carried out by the bypass hardware. For this purpose, the program-controlled unit communicates the data and/or parameters required for the calculation to the bypass hardware, and then causes the bypass hardware to carry out the filter operation. The bypass hardware thereupon carries out the calculation to be carried out and transmits the result back to the program-controlled unit, which then processes said result further or uses it for control of the internal combustion engine.

The bypass hardware may contain a dedicated program-controlled unit and is formed for example by a powerful computer. Bypass hardware solutions of this type are known, and so further explanations in this respect can be dispensed with.

Using a bypass hardware, it is also possible to test nonoptimized programs under real conditions.

However, the use of a bypass hardware also entails various disadvantages. In particular, the construction and the operation of an arrangement containing a bypass hardware require a very high outlay.

Furthermore, a bypass hardware also cannot ensure under all circumstances that the program-controlled unit or the system containing the latter can be tested under real conditions. Particularly if the time available for the calculation to be carried out by the bypass hardware is very short, for example amounts to only a few µs, it can happen that even the bypass hardware cannot supply the result of the calculation in timely fashion.

Therefore, the present invention is based on the object of finding a possibility which enables programs that have not yet been optimized to be tested under real conditions, under all circumstances, with a low outlay.

This object is achieved according to the invention by means of the program-controlled unit claimed in patent claim 1.

The program-controlled unit according to the invention is distinguished by the fact that it contains a second CPU, which can be used as bypass hardware or as a constituent part of a bypass hardware.

This proves to be doubly advantageous. On the one hand because the bypass hardware can thus be realized and operated with comparatively low outlay, and on the other hand because an internal bypass hardware can supply the result of a calculation that it is to carry out more rapidly than an external bypass hardware. The claimed program-controlled unit consequently enables programs that have not yet been optimized to be tested under real conditions, under all circumstances, with a low outlay.

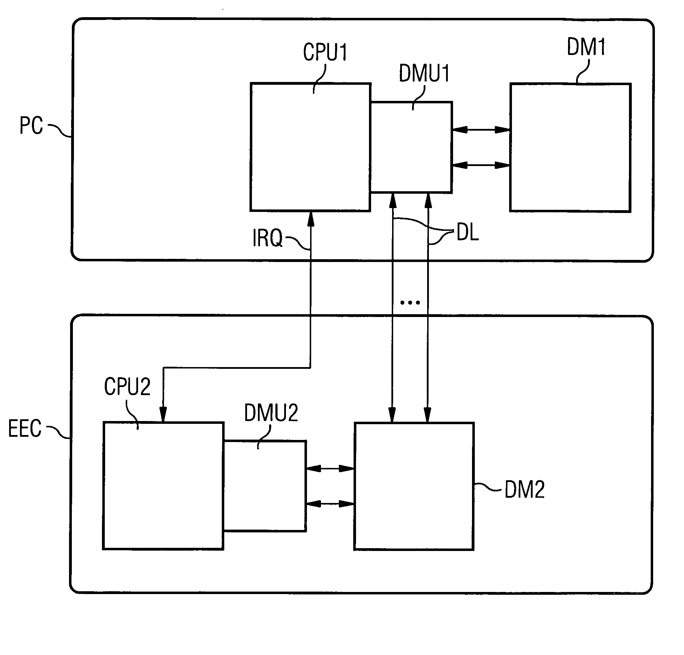

Advantageous developments of the invention can be gathered from the subclaims, the description below, and the figure.

The invention is explained in more detail below using exemplary embodiments with reference to the figure.

The figure shows an exemplary embodiment of a program-controlled unit with a bypass hardware.

The program-controlled unit described below is a microcontroller. However, a microprocessor, a signal processor or some other unit which executes a program could also be involved.

In the example under consideration, the microcontroller is a constituent part of a motor vehicle controller which drives an internal combustion engine of a motor vehicle. However, the microcontroller presented here can also be used in arbitrary other devices.

It shall already be pointed out at this juncture that the components of the microcontroller presented here which are shown and described are only those components which are necessary for explaining the special features of this microcontroller. It is known, and needs no further explanation, that a microcontroller comprises a multiplicity of further components.

The microcontroller shown in the figure is formed by a multichip module containing a plurality of semiconductor chips. More precisely, the microcontroller described here comprises a first semiconductor chip, which is designated by PC in the figure, and a second semiconductor chip, which is designated by EEC in the figure.

In the example considered, the semiconductor chips are soldered on one another using the flip-chip technique. However, they could also be arranged next to one another and be connected to one another via bonding wires.

The first semiconductor chip PC is the actual microcontroller. It contains a first CPU CPU1, a first data management unit DMU1, a first data memory DM1, and also further components (not shown in the figure) such as, for example, a program memory and diverse peripheral units such as, for example, an A/D converter, a timer, a DMA controller, and I/O controllers.

The second semiconductor chip EEC contains a second CPU CPU2, a second data management unit DMU2, a second data memory DM2, and possibly various further components.

The second semiconductor chip EEC is an optional semiconductor chip which may be provided, but need not be provided. The actual microcontroller is formed by the first semiconductor chip PC; this semiconductor chip also operates properly without the second semiconductor chip EEC. The situation is preferably such that two microcontroller variants are produced, namely a first variant with a second semiconductor chip EEC, and a second microcontroller variant without a second semiconductor chip EEC. The first microcontroller variant is a development variant which is used during the development of the system containing the microcontroller, to be precise preferably only in this phase. The second microcontroller variant is a mass-produced product variant which is used in the finished developed system.

The CPU CPU1 of the first semiconductor chip PC is connected to the CPU CPU2 of the second semiconductor chip EEC via a line IRQ, designated as interrupt request line hereinafter. Furthermore, the data management unit DMU1 is connected to the data memory DM2 of the second semiconductor chip EEC via data lines DL. It goes without saying, moreover, that further connections not shown in the figure may also be provided between the semiconductor chip.

The second semiconductor chip EEC preferably contains no input and/or output terminals via which it is connected to system components provided outside the microcontroller. Data transfers between the second semiconductor chip EEC and system components provided outside the microcontroller are effected, insofar as is necessary via the first semiconductor chip PC. This proves to be advantageous because the number and the position of the input and/or output terminals of the microcontroller thus do not depend on whether or not the microcontroller contains the second semiconductor chip EEC.

In principle, however, the second semiconductor chip EEC could also have input and/or output terminals via which it can be connected to devices provided outside the microcontroller. However, the input and/or output terminals of the second semiconductor chip EEC are preferably only those input and/or output terminals which do not have to be present in the mass-produced product variant of the semiconductor, that is to say, by way of example, input and/or output terminals for the connection of an external control device for controlling the components accommodated on the second semiconductor chip, and, in particular, no input and/or output terminals for the connection of application hardware.

The components of the second semiconductor chip EEC that are shown can be used as bypass hardware during the testing of the microcontroller or the system containing the microcontroller. More precisely, the situation is such that the CPU CPU1 of the first semiconductor chip PC can cause the second semiconductor chip EEC to execute tasks which said CPU cannot deal with in the time available to it. Said second semiconductor chip, more precisely the CPU CPU2 thereof, executes said task in response to a corresponding requirement on the part of the CPU CPU1 and outputs the result to the CPU CPU1 of the first semiconductor chip PC or provides the result for fetching by the CPU CPU1 of the first semiconductor chip PC.

The tasks which the CPU CPU1 causes to be executed by the bypass hardware are tasks which the CPU CPU1 itself has to execute in normal operation, i.e. outside the test mode. The bypass hardware is used only during the testing of the microcontroller or the system containing the microcontroller. More precisely, it is used to execute tasks for which as yet no program exists which can be executed by the CPU CPU1 in the time available for this. Such a task consists, by way of example, but far from exclusively, in the carrying out of a filter operation, which, as is known, is associated with a very high computational complexity. Programs for particularly complicated calculations such as the carrying out of a filter operation, for example, generally have to be optimized in order that they can be executed by a heavily burdened microcontroller such as, for example, the microcontroller of a motor vehicle controller. The optimization may consist for example in replacing multiplications by shift operations, and/or in working only with a specific number of places after the point, and/or in choosing filter coefficients that are particularly simple to process, etc. The provision of the bypass hardware in the microcontroller makes it possible, then, to test the microcontroller or the system containing the latter even when the program to be executed by the CPU CPU1 has not yet been optimized, and to carry out the optimization of the program only when the test of the microcontroller or the system containing the microcontroller has proceeded satisfactorily. This facilitates and accelerates the program development. The program can be tested under real conditions even in the nonoptimized state, and it has to be optimized only once the optimal closed-loop or open-loop control algorithm has been determined by means of practical tests.

The tasks which the CPU CPU1 of the first semiconductor chip PC causes to be executed by the second semiconductor chip EEC, and the points in time at which this is done, are determined by the program which is executed by the CPU CPU1 of the first semiconductor chip PC. During the testing of the microcontroller or the system containing the microcontroller, the program executed by the CPU CPU1 contains instructions by means of which the CPU CPU1
- provides for the CPU CPU2 the data which the latter requires for executing the tasks to be executed by it,
- causes the CPU CPU2 to execute the tasks that cannot be executed by the CPU CPU1, and
- receives or fetches the result of the task executed by the CPU CPU2.

These instructions are situated at those locations in the program at which there should be the instructions which represent the tasks that the CPU CPU1 cannot execute properly, for example fast enough.

In the example considered, the situation is such
- that the data required by the CPU CPU2 are provided by the CPU CPU1 writing said data to the second data memory DM2 via the first data management unit DMU1 and the data lines DL,
- that the CPU CPU2 is caused to execute the task to be executed by it by the CPU CPU1 communicating to the CPU CPU2 via the interrupt request line IRQ an interrupt request assigned to the task to be executed,
- that the execution of the task to be executed by the CPU CPU2 is effected by the execution of an interrupt service routine assigned to the interrupt request, and in this case uses the data written to the data memory DM2 by the CPU CPU1,
- that the CPU CPU2 writes the results of the task which it has executed to the second data memory DM2 via the second data management unit DMU2, and
- that the CPU CPU1 reads said results from the second data memory DM2 via the data lines DL and the first data management unit DMU1.

The read-out of the results stored in the second data memory DM2 by the CPU CPU1 may (but need not) be instigated by an interrupt request which the CPU CPU2 outputs to the CPU CPU1 after it has written the results to the second data memory DM2.

It should be apparent, and needs no further explanation, that the execution of a task that cannot be executed by the CPU CPU1 by the CPU CPU2, in particular the communication between the CPUs CPU1 and CPU2 or between the semiconductor chips PC and EEC, can also be effected in an arbitrary other manner.

It may prove to be advantageous
- if the CPU CPU2 writes to the second data memory DM2 not only the result of the task that it is to execute, but also an identifier, which can be used to identify whether the task to be executed by the CPU CPU2 has been executed,
- and if the CPU CPU1 uses the data fetched from the second data memory DM2 only if a check of the identifier reveals that the fetched data are the results of the task to be executed by the CPU CPU2.

It might also be provided that the CPU CPU1 repeatedly reads out the identifier (polling), and reads out the data representing the result only when it is evident from the identifier that the data representing the result actually constitute the result of the task to be executed by the CPU CPU2.

Such an identifier can be used to prevent the CPU CPU1 from working with invalid data.

Furthermore, it proves to be advantageous if, during the time during which the CPU CPU1 waits for the results from the CPU CPU2, said CPU CPU1 itself determines data which it could use instead of the result that is to be determined by the CPU CPU2 if the results of the CPU CPU2 are not yet present at the point in time at which the CPU CPU1 requires them. The determination of these data by the CPU CPU1 must be based on a simple calculation which can be carried out rapidly and which can be carried out within the available time. The data also do not have to be optimally suitable for the control of the device that is to be controlled by the microcontroller. The nature of the data need only be such that the use of these data instead of the result to be supplied by the CPU CPU2 does not result in damage or destruction of the device to be controlled by the microcontroller. As a result, an insufficiently rapid execution of the task transferred to the CPU CPU2 can be prevented from leading to damage or destruction of the device to be controlled by the microcontroller.

In addition to the bypass hardware described above, the second semiconductor chip preferably also contains debug resources which can be used to monitor and influence the prevailing states and operations progressing within the first semiconductor chip PC.

Such debug resources make it possible, for example, to monitor the occurrence of specific states or events within the microcontroller and, when such a state or such an event has occurred, to carry out or instigate specific actions, in which case both the states or events to be detected and the actions to be carried out or instigated upon the occurrence of such a state or event can be prescribed by a control device provided outside the microcontroller.

The states or events whose occurrence can be monitored by the debug resources may encompass, by way of example, but far from exclusively:
- the access by the microcontroller or specific components thereof to specific memory addresses or registers, and/or
- the transfer of specific data within the microcontroller, and/or
- a specific status of the instruction pointer.

The actions which the debug resources execute or instigate upon the occurrence of such a, or a different, state or event, may encompass, by way of example, but likewise not exclusively:
- a reporting of the fact that the condition to be monitored has occurred to a device provided outside the microcontroller,
- the read-out or the alteration of the content of specific memory elements or registers,
- the outputting of trace information, i.e. the outputting of addresses, data and/or control signals that are transferred or used within the microcontroller, to a device provided outside the microcontroller,
- the stopping of the program execution,
- the continuation of the program execution in the so-called single-step mode, or
- the causing of the CPU CPU1 to execute a program stored in the debug resources.

The abovementioned and other actions may also be executed, at least in part, if no specific event has occurred.

The provision of debug resources thus affords a whole series of possibilities for localizing and eliminating errors that occur in the microcontroller.

The debug resources may be constructed for example like the debug resources described in DE 101 39 660. However, they may also have an arbitrary other construction.

Program-controlled units with debug resources are known, and so a more detailed description of the construction and functioning of the debug resources can be dispensed with.

The debug resources may also track states and events occurring in the bypass hardware and/or also execute the abovementioned actions in the bypass hardware, as a result of which errors occurring in the bypass hardware can also be localized and eliminated.

Since the debug resources, in the same way as the bypass hardware, are normally required only during the development of the system containing the microcontroller, it proves to be advantageous for the debug resources also to be accommodated on the second semiconductor chip EEC in addition to the bypass hardware.

The accommodation of both the bypass hardware and the debug resources on the second semiconductor chip EEC makes it possible for specific components of the second semiconductor chip EEC to be utilized both by the bypass hardware and by the debug resources.

Thus, by way of example, the data memory DM2 of the bypass hardware can simultaneously be used as an overlaying memory of the debug resources, in which are stored programs which the CPU CPU1 is intended to execute during the testing of the microcontroller or the system containing the latter instead of the program that it normally executes.

Furthermore, it might be provided that the CPU CPU2 is simultaneously used as CPU of the debug resources (if debug resources, such as, for example, the debug resources disclosed in DE 101 39 660, contain a CPU). At the present time, however, it is preferred to use the CPU CPU2 exclusively as CPU of the bypass hardware, and to provide a dedicated CPU for the debug resources. It is thus possible to prevent the CPU CPU2 from being burdened so severely by the debug resources that it can no longer execute, or no longer execute sufficiently rapidly, the tasks transferred to it by the CPU CPU1, and/or the CPU CPU2 being burdened so severely by the tasks transferred to it by the CPU CPU1 that the debugging of the first semiconductor chip PC is no longer possible, or is possible only to a restricted extent.

The debug resources may also control the cooperation of the CPUs CPU1 and CPU2.

By way of example, the debug resources may be designed and operated in such a way that they can ascertain, through appropriate monitoring of the operations proceeding in the CPU CPU1, when and what task the CPU CPU2 has to execute for the CPU CPU1, and can cause the CPU CPU2 to execute the respective task. This obviates the need for the CPU CPU1 to instigate the execution of the task to be executed by the CPU CPU2 by the outputting of a corresponding interrupt request signal.

Furthermore, the debug resources may be designed and operated in such a way that they can make available for the CPU CPU2 the data which are to be used to carry out the task to be executed by the CPU CPU2. This obviates the need for the CPU CPU1 to write the data to be used to the data memory DM2.

The debug resources may also ensure that the results of the task executed by the CPU CPU2 are transferred to the location to which the CPU CPU1 would have written the relevant results if it had itself executed the task executed by the CPU CPU2. This obviates the need for the CPU CPU1 to fetch the results from a different location than is the case in normal operation of the microcontroller or the system containing the latter.

These and/or other actions of the debug resources mean that the CPUs CPU1 and CPU2 can cooperate even more efficiently than is already the case anyway.

The CPU CPU2 can also be utilized in other ways at times during which it does not have to execute any tasks for the CPU CPU1.

By way of example, in such phases, the CPU CPU2 can monitor, through the execution of a monitoring program, whether the CPU CPU1 is operating properly and, if it is ascertained in the process that this is not the case, ensure through corresponding measures that the device controlled by the microcontroller is not driven in such a way that it is damaged or destroyed (failsafe function).

In phases in which the CPU CPU2 does not have to execute any tasks for the CPU CPU1, said CPU CPU2 could also execute an acquisition program which acquires the data fed to the CPU CPU1 and/or the data output by the CPU CPU2 and possibly, in addition, the frequency with which the respective data occur. The result of such data acquisition can be used during the optimization of the program executed by the CPU CPU1; generally, there should be a particularly efficient reaction to states and events that occur particularly frequently.

Moreover, it might be provided that, in phases in which the CPU CPU2 does not have to execute any tasks for the CPU CPU1, said CPU CPU2 executes a stimulation program which feeds predetermined signals or signal sequences to the CPU CPU1 at predetermined points in time. As a result, it is possible to test the reaction of the CPU CPU1 to states or events which occur only very infrequently under real conditions. Possible examples of application are the practically relevant simulation of transmission errors, or the generation of an additional computational load for testing the behavior of the microcontroller in exceptional situations.

Furthermore, in phases in which the CPU CPU2 does not have to execute any tasks for the CPU CPU1, said CPU CPU2 could monitor the proper functioning of the debug resources. The use of a CPU for monitoring debug resources is disclosed in DE 101 39 660 A1; the CPU CPU2 could at least occasionally undertake the function or parts of the function of the debug CPU described in the aforementioned document.

It might also be provided that the CPU CPU1 executes a first control program, and the CPU CPU2 simultaneously executes a second control program - altered by comparison therewith - and an evaluation program, the evaluation program checking whether and, if appropriate, to what extent the first control program and the second control program would bring about different driving of the device to be controlled by the microcontroller.

The CPUs CPU1 and CPU2 are preferably identical CPUs. In principle, however, the CPUs may be arbitrary CPUs that are selected independently of one another. The CPU CPU2 may be an arbitrary processing device in this case. By way of example, an arithmetic coprocessor or a digital signal processor may also be involved.

The microcontroller described above is a microcontroller comprising a plurality of semiconductor chips. It goes without saying that it is also possible for individual, a plurality, or all of the components which are accommodated on the second semiconductor chip EEC in the example considered to be accommodated on the first semiconductor chip. In this case, it proves to be advantageous if the components of the second semiconductor chip which are arranged on the first semiconductor chip are arranged entirely at the edge of the first semiconductor chip, so that semiconductor chips without these components can also be produced in a very simple manner by covering those regions of the exposure masks used during the semiconductor chip production which are assigned to these components. The construction of a semiconductor chip in which different semiconductor chip variants can be produced by covering or not covering specific regions of the exposures masks is disclosed in DE 101 00 344 A1.

The program-controlled unit described proves to be advantageous independently of the details of the practical realization. It enables programs that have not yet been optimized to be tested under real conditions, under all circumstances, with a low outlay.

### List of reference symbols

- CPU1: First CPU
- CPU2: Second CPU
- DL: Data line
- DM1: First data memory
- DM2: Second data memory
- DMU1: First data management unit
- DMU2: Second data management unit
- EEC: Second semiconductor chip
- IRQ: Interrupt request line
- PC: First semiconductor chip

## Claims

1. A program-controlled unit with a CPU (CPU1),
wherein
the program-controlled unit contains a second CPU (CPU2), which can be used as bypass hardware (CPU2, DMU2, DM2) or as a constituent part of a bypass hardware.

2. The program-controlled unit as claimed in claim 1,
wherein
the bypass hardware (CPU2, DMU2, DM2) is an optional component of the program-controlled unit and is provided only in variants of the program-controlled unit which are provided for testing the program-controlled unit or the system containing the latter.

3. The program-controlled unit as claimed in claim 1,
wherein
the second CPU (CPU2) is provided for executing tasks which the first CPU (CPU1) cannot execute or cannot execute in the available time.

4. The program-controlled unit as claimed in claim 3,
wherein
the first CPU (CPU1) causes the second CPU (CPU2) to execute the tasks which the first CPU cannot execute or cannot execute in the available time.

5. The program-controlled unit as claimed in claim 4,
wherein
the second CPU (CPU2) is caused to execute the tasks which the first CPU (CPU1) cannot execute or cannot execute in the available time by a procedure in which, when such a task is to be executed, the first CPU outputs an interrupt request signal to the second CPU.

6. The program-controlled unit as claimed in claim 4,
wherein,
before the second CPU (CPU2) is caused to execute a task, the first CPU (CPU1) writes the data which the second CPU requires for executing said task to a data memory (CM2), which can be accessed by both the first CPU and the second CPU.

7. The program-controlled unit as claimed in claim 6,
wherein,
after being caused to execute a task, the second CPU (CPU2) executes that task using the data written to the data memory (DM2) by the first CPU (CPU1) and writes the result to the data memory.

8. The program-controlled unit as claimed in claim 7,
wherein
the first CPU (CPU1) fetches from the data memory (DM2) the results of the task which it caused the second CPU (CPU2) to execute.

9. The program-controlled unit as claimed in claim 7,
wherein,
after the result has been written to the data memory (DM2), the second CPU (CPU2) writes an identifier to the data memory, using which identifier the first CPU (CPU1) can determine whether the second CPU has already written the result of the task to be executed by it to the data memory.

10. The program-controlled unit as claimed in claim 9,
wherein
the first CPU (CPU1) repeatedly reads the identifier from the data memory (DM2), and uses the identifier to check whether the second CPU (CPU2) has already written the result of the task to be executed by it to the data memory.

11. The program-controlled unit as claimed in claim 3,
wherein,
in the time during which the second CPU (CPU2) executes the task to be executed by it, the first CPU (CPU1) carries out a calculation whose result it can use instead of the result supplied by the second CPU if the second CPU cannot execute the task to be executed by it within the available time.

12. The program-controlled unit as claimed in claim 3,
wherein,
in phases during which the second CPU (CPU2) does not have to execute a task for the first CPU (CPU1), said second CPU executes a monitoring program which monitors whether the first CPU is operating properly.

13. The program-controlled unit as claimed in claim 12,
wherein,
when the second CPU (CPU2) ascertains that the first CPU (CPU1) is not operating properly, it ensures that the device controlled by the microcontroller is not driven in such a way that it is damaged or destroyed.

14. The program-controlled unit as claimed in claim 3,
wherein,
in phases during which the second CPU (CPU2) does not have to execute a task for the first CPU (CPU1), said second CPU executes an acquisition program which acquires the data fed to the first CPU and/or the data output by the first CPU.

15. The program-controlled unit as claimed in claim 14,
wherein
the acquisition program also acquires the frequency with which the respective data occurs.

16. The program-controlled unit as claimed in claim 3,
wherein,
in phases during which the second CPU (CPU2) does not have to execute a task for the first CPU (CPU1), said second CPU executes a stimulation program by means of which predetermined signals or signal sequences are fed to the first CPU at predetermined points in time.

17. The program-controlled unit as claimed in claim 1,
wherein
the first CPU (CPU1) executes a first control program, and the second CPU (CPU2) executes a second control program and also an evaluation program, the evaluation program checking whether and, if appropriate, to what extent the first control program and the second control program would bring about different driving of the device to be controlled by the microcontroller.

18. The program-controlled unit as claimed in claim 1,
wherein
the program-controlled unit contains debug resources for monitoring the operations proceeding within the program-controlled unit.

19. The program-controlled unit as claimed in claim 18,
wherein
the debut resources control the cooperation of the first CPU (CPU1) and the second CPU (CPU2).

20. The program-controlled unit as claimed in claim 19,
wherein
the debug resources are designed and operated in such a way that they can ascertain, through monitoring of the operations proceeding in the first CPU (CPU1), when and what task the second CPU (CPU2) has to execute for the first CPU, and that they can cause the second CPU to execute the respective task.

21. The program-controlled unit as claimed in claim 19,
wherein
the debug resources are designed and operated in such a way that they can make available for the second CPU (CPU2) the data which are to be used to carry out the task to be executed by the second CPU.

22. The program-controlled unit as claimed in claim 19,
wherein
the debug resources are designed and operated in such a way that they can ensure that the results of the task executed by the second CPU (CPU2) are transferred to the location to which the first CPU (CPU1) would have written the relevant results if it had itself executed the task executed by the second CPU.

23. The program-controlled unit as claimed in claim 1,
wherein
- the program-controlled unit is formed by a multichip module containing a plurality of semiconductor chips,
- the first CPU (CPU1) of the program-controlled unit is accommodated on a first semiconductor chip (PC), and the second CPU (CPU2) is accommodated on a second semiconductor chip (EEC), and
- the program-controlled unit is also functional without the second semiconductor chip.

24. The program-controlled unit as claimed in claim 23,
wherein
the debug resources are also accommodated on the second semiconductor chip (EEC).

25. The program-controlled unit as claimed in claim 1,
wherein
the program-controlled unit is accommodated on a single semiconductor chip, and wherein the bypass hardware is arranged entirely at the edge of said semiconductor chip, so that semiconductor chips without bypass hardware can also produced by covering that region of the exposure masks used during the semiconductor chip production which is assigned to the bypass hardware.
